# EUROPEAN PATENT SPECIFICATION

(11) **EP 3 521 779 B1**
(45) Date of publication and mention of the grant of the patent: **02.03.2022**
(21) Application number: 18154520.3
(22) Date of filing: 31.01.2018
(51) Int. Cl.: G01F 23/38, G01F 23/46, G01F 23/54, G01F 23/62, G01F 23/72, H01H 36/00, G01D 5/251, H01C 10/36, H01C 10/06

(54) **FUEL LEVEL SENSOR**
KRAFTSTOFFSTANDSENSOR
CAPTEUR DE NIVEAU DE CARBURANT

(43) Date of publication of application: 07.08.2019
(73) Proprietor: TI Automotive Technology Center GmbH, 76437 Rastatt (DE)
(72) Inventor: Boecker, Albert J., 76275 Ettlingen (DE); Pintilie, Radu-Paul, 76137 Karlsruhe (DE)
(74) Representative: dompatent von Kreisler Selting Werner - Partnerschaft von Patent- und Rechtsanwälten mbB

(56) References cited:
- US-A1- 2010 207 610
- US-B1- 6 401 533
- US-B2- 6 803 759

## Description

The invention relates to a fuel level sensor.

It is known from the state of the art to use resistance networks, in order to detect the fuel level in a tank. For this purpose a resistance network is arranged on a substrate and is assigned to a contact spring structure which can be deflected under the action of a permanent magnet. The electrical connection between the resistance network and the contact spring structure is established by a contact which is dependent on the position of the permanent magnet which is moved depending on the fuel level inside the tank.

Such a position sensor is known from US 8,179,125 B2. The distal end of each contact spring has at least two contact spring elements being assigned to each individual contact of the resistance network. Two adjoining contact spring elements are mechanically interconnected in a middle part of the contact spring. The provision of at least two contact springs which are positioned opposite each individual contact of the resistance network is intended to ensure that in the event of contaminating particles adhering, at least one of the two contact springs produces a connection with the contact. In order to avoid a natural shift of individual contact springs due to magnetic influences on the position sensor, two individual contact spring elements are connected to one another mechanically so that their ability to move freely in a plane in which they are arranged is restricted.

It is an object of the present invention to provide a fuel level sensor with a simpler construction.

This object is achieved by the features of claim 1 of the present invention. The inventive fuel level sensor comprises a magnet being movable along a circle segment shaped path responsive to the fuel level in a tank. The fuel level sensor further comprises a resistance network, comprising a plurality of individual electrical contacts. Further the fuel level sensor comprises a plurality of contact springs being deflectable under the force of the magnet in a direction towards the resistance network so as to establish an electrical contact with one individual electrical contact of the resistance network depending on the position of the magnet along the circle segment shaped path. The fuel level is determined depending on which individual electrical contact of the resistance network is in contact with a contact spring. Up to this point the invention corresponds to fuel level sensors which are known from the state of the art.

The invention is characterized in that the distal end of each contact spring has a u-shaped or v-shaped form. In other words the distal end of each contact spring has the form of the letter U or the form of the letter V. It is preferred that this u-shaped form or v-shaped form is arranged in a direction perpendicular to the longitudinal direction of the contact spring. In other words the letter U or the letter V can only be read when reading along the longitudinal direction of the contact spring. This feature will be described in more detail in the context of the figures.

By this waved shape at least two contact points can be created between a contact spring and its corresponding individual electrical contact. Therefore, it can be assured that the distal end of a contact spring will be in contact with its corresponding individual electrical contact given there is a contamination on top of the contact surface. However, the influence of lateral magnetic forces on each contact spring can be reduced due to the reduced material in the distal end of each contact spring.

It is preferred that the distal end has a double U-shaped or double V-shaped form so that the distal end has at least three wave crests and two wave troughs.

It is further preferred that the proximal part of each contact spring comprises two parallel individual stays.

It is further preferred that a middle part between the proximal part and the distal end of each contact spring comprises a stiffening portion in which the parallel individual stays are connected to each other, thereby preventing a lateral movement of the contact springs. This stiffening portion can also be used to increase the magnetic properties of the contact springs. In the following a preferred embodiment of the invention is described in the context of the figures.

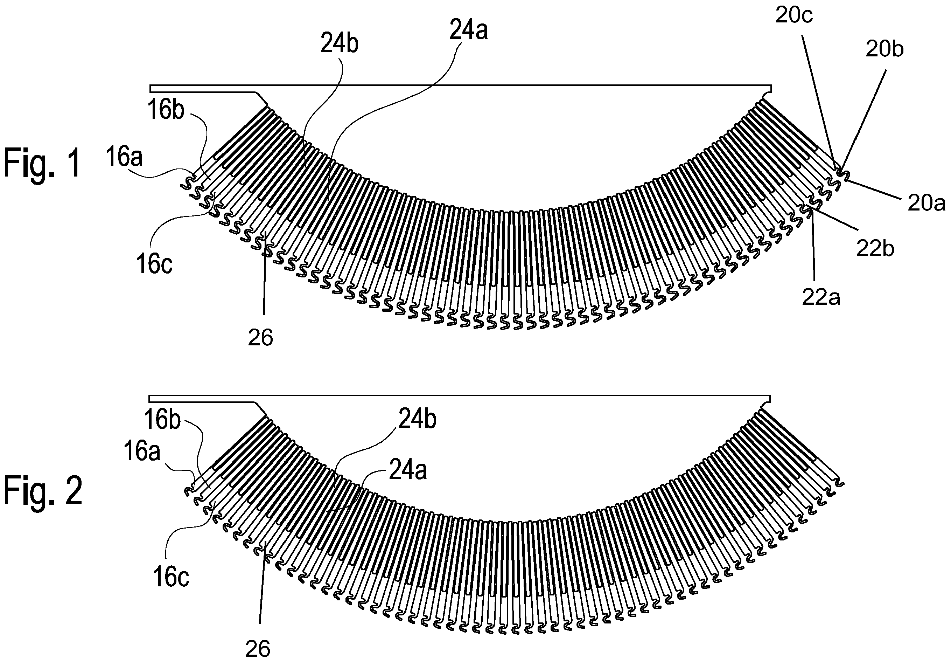

Figures 1 and 2 show a part of the inventive fuel sensor.

A part of the resistance network comprising a plurality of individual electrical contacts. A plurality of contact springs 16a, 16b, 16c,... are arranged corresponding to each individual electrical contact. These contact springs 16a, 16b, 16c,... are deflectable under the force of the magnet (not shown in the figure) in a direction towards the resistance network so as to establish an electrical connection with one individual electrical contact of the resistance network depending on the position of the magnet. The magnet is moved along a circle segment shaped path responsive to the fuel level in a tank (for example by using a float arm as it is known from the prior art).

The fuel level is determined depending on which individual electrical contact of the resistance networkis in contact with a contact spring 16a, 16b,16c,....

As can be seen in figure 1 the distal end of each contact spring 16a, 16b, 16c,... has a double u-shaped or double v-shaped form. The distal end has three wave crests 20a, 20b, 20c and two wave troughs 22a, 22b thereby forming a W-shape, the W being arranged in a direction perpendicular to the longitudinal direction of the contact springs 16a, 16b, 16c,.... In other words the distal end of the contact spring 16a, 16b, 16c,... has a double u-shaped form. Hereby, this u-shaped form is arranged in a direction perpendicular to the longitudinal direction of the contact spring 16a, 16b, 16c,.... In other words the letter U can only be read in a direction along the longitudinal direction of the contact springs. Thereby, at least two contact points between a contact spring 16a, 16b, 16c,... and its corresponding individual electrical contact are created.

In its proximal part each contact spring 16a, 16b, 16c,... comprises two parallel individual stays 24a, 24b. In a middle part between the proximal part and the distal end of each contact spring 16a, 16b, 16c,... a stiffening portion 26 is arranged in which the parallel individual stays 24a, 24b are connected to each other.

Another embodiment of the invention is shown in figure 2. Here again, the distal end of each contact spring 16, 16b, 16c,... has a u-shaped form. However, this distal end only forms one single u and therefore does not have a double u-form as the embodiment of figure 1.

## Claims

1. Fuel level sensor, with
a magnet being moveable along a circle segment shaped path responsive to the fuel level in a tank,
a resistance network comprising a plurality of individual electrical contacts ,
a plurality of contact springs (16a, 16b, 16c,...) being deflectable under the force of the magnet (12) in a direction towards the resistance network so that a contact spring establishes an electrical connection with one individual electrical contact of the resistance network depending on the position of the magnet along the circle segment shaped path,
the fuel level being determined depending on which individual electrical contact of the resistance network is in contact with a contact spring (16a, 16b, 16c,...),
**characterized in that**
the distal end of each contact spring (16a, 16b, 16c,...) has a u-shaped or v-shaped form, thereby creating at least two contact points between a contact spring (16a, 16b, 16c,...) and its corresponding individual electrical contact.

2. Fuel level sensor according to claim 1, **characterized in that** the distal end has double u-shaped or a double v-shaped form so that the wave shaped distal end has at least three wave crests (20a, 20b, 20c,...) and two wave troughs (22a, 22b), thereby forming a W-shape, the W being arranged a direction perpendicular to the longitudinal direction of the contact springs (16a, 16b, 16c,...).

3. Fuel level sensor according to claim 1 to claim 2, **characterized in that** the proximal part of each contact spring (16a, 16b, 16c,...) comprises two parallel individual stays (24a, 24b).

4. Fuel level sensor according to claim 3, **characterized in that** a middle part between the proximal part and the distal end of each contact spring (16a, 16b, 16c,...) comprises a stiffening portion (26) in which the parallel individual stays (24a, 24b) are connected to each other.

5. Fuel level sensor according to claim 1 to claim 4, **characterized in that** the u-shaped form or v-shaped form is arranged in a direction perpendicular to the longitudinal direction of the contact spring (16a, 16b, 16c).

## Patentansprüche

1. Kraftstoffstandsensor mit:
einem Magneten, der entlang eines kreissegmentförmigen Weges in Reaktion auf den Kraftstoffstand in einem Tank beweglich ist,
einem Widerstandsnetzwerk, das eine Vielzahl von einzelnen elektrischen Kontakten aufweist,
eine Vielzahl von Kontaktfedern (16a, 16b, 16c, ...), die unter der Kraft des Magneten (12) in eine Richtung zum Widerstandsnetzwerk ablenkbar sind, so dass eine Kontaktfeder eine elektrische Verbindung mit einem einzelnen elektrischen Kontakt des Widerstandsnetzwerks je nach Position des Magneten entlang des kreissegmentförmigen Weges herstellt,
wobei der Kraftstoffstand abhängig davon bestimmt wird, welcher einzelne elektrische Kontakt des Widerstandsnetzwerks mit einer Kontaktfeder (16a, 16b, 16c, etc.) in Kontakt steht,
**dadurch gekennzeichnet, dass**
das distale Ende jeder Kontaktfeder (16a, 16b, 16c, ...) eine u-Form oder v-Form aufweist, wodurch mindestens zwei Kontaktpunkte zwischen einer Kontaktfeder (16a, 16b, 16c, ...) und ihrem entsprechenden einzelnen elektrischen Kontakt erzeugt werden.

2. Kraftstoffstandsensor nach Anspruch 1, **dadurch gekennzeichnet, dass** das distale Ende eine doppelte u-Form oder eine doppelte v-Form aufweist, so dass das wellenförmige distale Ende mindestens drei Wellenberge (20a, 20b, 20c, ...) und zwei Wellentäler (22a, 22b) aufweist, wodurch eine W-Form gebildet wird, wobei das W in einer Richtung senkrecht zur Längsrichtung der Kontaktfedern (16a, 16b, 16c, ...) angeordnet ist.

3. Kraftstoffstandsensor nach Anspruch 1 bis Anspruch 2, **dadurch gekennzeichnet, dass** der proximale Teil jeder Kontaktfeder (16a, 16b, 16c, ...) zwei parallele einzelne Streben (24a, 24b) aufweist.

4. Kraftstoffstandsensor nach Anspruch 3, **dadurch gekennzeichnet, dass** ein Mittelteil zwischen dem proximalen Teil und dem distalen Ende jeder Kontaktfeder (16a, 16b, 16c, ...) einen Aussteifungsabschnitt (26) aufweist, in dem die parallelen einzelnen Streben (24a, 24b) miteinander verbunden sind.

5. Kraftstoffstandsensor nach Anspruch 1 bis Anspruch 4, **dadurch gekennzeichnet, dass** die u-Form oder v-Form in einer Richtung senkrecht zur Längsrichtung der Kontaktfeder (16a, 16b, 16c) angeordnet ist.

## Revendications

1. Capteur de niveau de carburant, doté
d'un aimant pouvant être déplacé le long d'un trajet en forme de segment de cercle en réponse au niveau de carburant dans un réservoir,
un réseau de résistances comprenant une pluralité de contacts électriques individuels, une pluralité de ressorts de contact (16a, 16b, 16c, ...) pouvant être déviés sous la force de l'aimant (12) dans une direction vers le réseau de résistances de sorte qu'un ressort de contact établit une connexion électrique avec un contact électrique individuel du réseau de résistances dépendant de la position de l'aimant le long du trajet en forme de segment de cercle,
le niveau de carburant étant déterminé en fonction du contact électrique individuel du réseau de résistances en contact avec un ressort de contact (16a, 16b, 16c, ...), **caractérisé en ce que**
l'extrémité distale de chaque ressort de contact (16a, 16b, 16c, ...) a une forme en forme de U ou en forme de V, créant ainsi au moins deux points de contact entre un ressort de contact (16a, 16b, 16c, ...) et son contact électrique individuel correspondant.

2. Capteur de niveau de carburant selon la revendication 1, **caractérisé en ce que** l'extrémité distale est en forme de double U ou en forme de double V de sorte que l'extrémité distale en forme d'onde présente au moins trois pointes d'ondes (20a, 20b, 20c, ...) et deux creux d'ondes (22a, 22b), formant ainsi une forme en W, le W étant disposé dans une direction perpendiculaire à la direction longitudinale des ressorts de contact (16a, 16b, 16c, ...).

3. Capteur de niveau de carburant selon la revendication 1 à 2, **caractérisé en ce que** la partie proximale de chaque ressort de contact (16a, 16b, 16c, ...) comprend deux supports individuels parallèles (24a, 24b).

4. Capteur de niveau de carburant selon la revendication 3, **caractérisé en ce qu'**une partie médiane entre la partie proximale et l'extrémité distale de chaque ressort de contact (16a, 16b, 16c, ...) comprend une partie de raidissement (26) dans laquelle les supports individuels parallèles (24a, 24b) sont connectés les uns aux autres.

5. Capteur de niveau de carburant selon la revendication 1 à 4, **caractérisé en ce que** la forme en forme de U ou en forme de V est disposée dans une direction perpendiculaire à la direction longitudinale du ressort de contact (16a, 16b, 16c).
